(19) Europäisches Patentamt
European Patent Office
Office européen des brevets

(11) EP 3 279 224 A1

(12) **EUROPEAN PATENT APPLICATION**
published in accordance with Art. 153(4) EPC

(43) Date of publication:
**07.02.2018 Bulletin 2018/06**

(21) Application number: **16772950.8**

(22) Date of filing: **30.03.2016**

(51) Int Cl.:
***C08F 110/06*** *(2006.01)* ***C08L 23/12*** *(2006.01)*
***H01G 4/18*** *(2006.01)*

(86) International application number:
**PCT/JP2016/060372**

(87) International publication number:
**WO 2016/159069 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015072149**
**31.03.2015 JP 2015072150**

(71) Applicant: **Prime Polymer Co., Ltd.**
**Tokyo 105-7122 (JP)**

(72) Inventors:
- **TAMURA, Satoshi**
  **Ichihara-shi**
  **Chiba 299-0108 (JP)**
- **HIGUCHI, Masashi**
  **Takaishi-shi**
  **Osaka 592-8501 (JP)**

(74) Representative: **J A Kemp**
**14 South Square**
**Gray's Inn**
**London WC1R 5JJ (GB)**

# (54) POLYPROPYLENE RESIN COMPOSITION AND MANUFACTURING METHOD THEREFOR, BIAXIALLY-STRETCHED FILM AND MANUFACTURING METHOD THEREFOR, AND CAPACITOR FILM FOR FILM CONDENSER

(57) Provided is a polypropylene resin composition which is good in extrusion property, which is good in appearance and low in variation in thickness when formed into a film, which is well-balanced in dynamic characteristics, and which has high heat resistance. A polypropylene resin composition satisfying the following requirements (1) to (3): (1) a melt flow rate (MFR) measured under a load of 2.16 kg at 230°C according to ASTM D1238 is 1 to 10 g/10 min; (2) a pentad isotactic fraction measured using $^{13}C$-NMR is 0.930 or more; and (3) Mz is 600000 to 1400000, and Mw/Mn is 6.5 to 14.0.

EP 3 279 224 A1

## Description

### Technical Field

The present invention relates to a polypropylene resin composition and a production method thereof, a biaxially stretched film and a production method thereof, and a capacitor film for a film capacitor.

### Background Art

A biaxially stretched film including polypropylene is widely used in an industrial film and a food film. Such a biaxially stretched film is now increasingly demanded, and in accordance with this, is required to be good in extrusion property and appearance, low in variation in thickness, and high in dynamic properties and heat resistance.
In addition, polypropylene has excellent stretching property and insulation property, and voltage resistance, and thus is widely used in a capacitor film for a film capacitor. Since a film capacitor is increasingly demanded mainly in the fields of automotive and household appliances and is also required to be further small in size, a capacitor film to be used therefor is required not only to be further enhanced in dielectric breakdown voltage, but also to have good extrusion property and appearance and to be low in variation in thickness, high in heat resistance, and well-balanced in dynamic characteristics.
Patent Literatures 1 to 7 each disclose a technique related to a film including polypropylene.

### Citation List

### Patent Literature

Patent Literature 1: JP09-52917A
Patent Literature 2: JP2006-143975A
Patent Literature 3: JP2009-57473A
Patent Literature 4: JP08-73528A
Patent Literature 5: JP08-73529A
Patent Literature 6: JP2004-315582A
Patent Literature 7: JP2012-149171A

### Summary of Invention

### Technical Problem

The films described in these literatures, however, are required to be further improved in terms of extrusion property, appearance, variation in thickness, dynamic characteristics and heat resistance.
An object of the present invention is to provide a polypropylene resin composition which is good in extrusion property, which is good in appearance and low in variation in thickness when formed into a film, which is well-balanced in dynamic characteristics, and which has high heat resistance.

### Solution to Problem

The present invention provides the following [1] to [11].

[1] A polypropylene resin composition satisfying the following requirements (1) to (3):

(1) a melt flow rate (MFR) measured under a load of 2.16 kg at 230°C according to ASTM D1238 is 1 to 10 g/10 min;
(2) a pentad isotactic fraction measured using $^{13}$C-NMR is 0.930 or more; and
(3) Mz is 600000 to 1400000, and Mw/Mn is 6.5 to 14.0.

[2] The polypropylene resin composition according to [1], wherein the pentad isotactic fraction in the requirement (2) is 0.930 to 0.999.
[3] The polypropylene resin composition according to [1] or [2], satisfying the following requirement (4):

(4) Mz/Mw is 2.0 to 5.0.

[4] The polypropylene resin composition according to any of [1] to [3], satisfying the following requirement (5):

(5) a relaxation time G'/G''/ω determined from a storage elastic modulus G' at an angular frequency ω and a loss elastic modulus G" at an angular frequency ω is 4 to 14 seconds at ω = 0.01 rad/sec.

[5] The polypropylene resin composition according to any of [1] to [4], satisfying the following requirement (6):

(6) an ash content is 50 ppm by mass or less.

[6] The polypropylene resin composition according to any of [1] to [5], satisfying the following requirement (7):

(7) a chlorine content is 10 ppm by mass or less.

[7] The polypropylene resin composition according to any of [1] to [6], having been treated with peroxide.
[8] A method for producing the polypropylene resin composition according to any of [1] to [6], including treating a raw material of the polypropylene resin composition with peroxide.
[9] A biaxially stretched film obtained by stretching the polypropylene resin composition according to any of [1] to [7] at a stretch area ratio (longitudinal × transverse) of 30 to 80 times.
[10] A method for producing a biaxially stretched film, including stretching the polypropylene resin composition according to any of [1] to [7] at a stretch area ratio (longitudinal × transverse) of 30 to 80 times.
[11] A capacitor film for a film capacitor, including the polypropylene resin composition according to any of [1] to [7].

Advantageous Effect of Invention

The present invention can provide a polypropylene resin composition which is good in extrusion property, which is good in appearance and low in variation in thickness when formed into a film, which is well-balanced in dynamic characteristics, and which has high heat resistance.

Description of Embodiments

[Polypropylene resin composition]

The polypropylene resin composition according to the present invention satisfies the following requirements (1) to (3). The polypropylene resin composition according to the present invention satisfies the following requirements (1) to (3), and thus is good in extrusion property, is good in appearance and low in variation in thickness when formed into a film, has well-balanced dynamic characteristics, and has high heat resistance. That is, the polypropylene resin composition according to the present invention is excellent in film formability, mechanical properties and heat resistance. In addition, the polypropylene resin composition preferably satisfies the following requirements (4) to (7).

(Requirement (1))

The melt flow rate (MFR) measured under a load of 2.16 kg at 230°C according to ASTM D1238, of the polypropylene resin composition according to the present invention, is 1 to 10 g/10 min, preferably 1.5 to 8.0 g/10 min, more preferably 2.0 to 5.0 g/10 min, further preferably 2.5 to 4.5 g/10 min. When the MFR is within the range from 1 to 10 g/10 min, extrudability and stretchability are favorable. On the other hand, if the MFR is less than 1 g/10 min, the resin pressure in molding increases to thereby make film molding difficult and to cause stretching not to be easy. In addition, if the MFR is more than 10 g/10 min, breakage easily occurs in film stretching. Such breakage is considered to be caused by a poor stretching stress.

(Requirement (2))

The isotactic pentad fraction (mmmm fraction) measured using $^{13}C$-NMR of the polypropylene resin composition according to the present invention is 0.930 or more, preferably 0.930 to 0.999, more preferably 0.940 to 0.995, further preferably 0.950 to 0.990, particularly preferably 0.960 to 0.985. If the mmmm fraction is less than 0.930, crystallinity is low, thereby not imparting desired dynamic properties. In addition, a capacitor film for a film capacitor, having a high dielectric breakdown voltage, is not obtained. The reason for this is presumed as follows: the mmmm fraction is low and

therefore an amorphous portion to which electricity is easily conducted exists in large numbers. On the other hand, the mmmm fraction is 0.999 or less, thereby enabling to suppress the occurrence of a void in stretching, and easily imparting desired dynamic properties.

Herein, the mmmm fraction is the value defined by the attribution described in A. zambelli et al., Macromolecules, 8, 687 (1975), and represents the ratio of an isotactic chain linkage present as a pentad unit in a molecule chain, measured using $^{13}$C-NMR. Specifically, the mmmm fraction is represented by the following formula.

$$\text{mmmm fraction} = (\text{peak area at } 21.7 \text{ ppm})/(\text{peak area at } 19 \text{ to } 23 \text{ ppm}).$$

(Requirement (3))

Mz measured using GPC (gel permeation chromatography) according to a method described below is referred to as "z average molecular weight", and provides information on a region in which the molecular weight is higher than Mw (weight average molecular weight). The Mz of the polypropylene resin composition according to the present invention is 600000 to 1400000, preferably 700000 to 1400000, more preferably 800000 to 1350000, further preferably 950000 to 1350000. When the Mz is within the range from 600000 to 1400000, extrudability and raw roll formability are favorable. If the Mz is less than 600000, the viscosity of the resin is poor to cause necking in molding, and a raw roll cannot be molded. In addition, if the Mz is more than 1400000, a reduction in the amount of extrusion is observed in extrusion molding, the appearance of a raw roll is inferior, and as a result, a good stretched film cannot be obtained.

In addition, the ratio (Mw/Mn) of Mw and Mn (number average molecular weight), representing the molecular weight distribution of the polypropylene resin composition according to the present invention, is 6.5 to 14.0, preferably 6.6 to 12.0, more preferably 6.8 to 10.0, further preferably 7.0 to 8.0. When the Mw/Mn is within the range from 6.5 to 14.0, stretchability is favorable. If the Mw/Mn is less than 6.5, a film having good thickness accuracy is not obtained. In addition, if the Mw/Mn is more than 14.0, the difference in viscosity in the resin is large, and breakage easily occurs in stretching of a sheet. In addition, the remaining stress after stretching becomes higher, resulting in an increase in heat shrinkage rate. Herein, Mz, Mw and Mn are values measured by methods described below.

(Requirement (4))

The ratio (Mz/Mw) of Mz and Mw of the polypropylene resin composition according to the present invention is preferably 2.0 to 5.0, more preferably 2.5 to 4.5, further preferably 3.0 to 4.0. The Mz/Mw is 2.0 or more, thereby imparting good stretchability. In addition, the Mz/Mw is 5.0 or less, thereby providing a stretched film good in extrusion property, raw roll appearance and thickness accuracy.

(Requirement (5))

When the polypropylene resin composition according to the present invention is formed into a film according to a method described below and subjected to viscoelasticity measurement under the conditions described below, the relaxation time G'/G''/ω (τ) determined from the storage elastic modulus G' at an angular frequency ω = 0.01 rad/sec and the loss elastic modulus G" at angular frequency ω = 0.01 rad/sec is preferably 4 to 14 seconds, more preferably 5 to 13 seconds, further preferably 6 to 12 seconds. The relaxation time G'/G"/ω is 4 seconds or more, to thereby allow the viscosity of the resin to be sufficient, hardly cause necking in molding, and allow a raw roll to be easily molded. In addition, the relaxation time G'/G"/ω is 14 seconds or less, to thereby allow the amount of extrusion in extrusion molding to be sufficient, allow a raw roll to have superior appearance, and provide a good stretched film. In particular, in the present invention, the relaxation time G'/G"/ω (τ) is within the range from 4 to 14 seconds and the requirements (1) to (3) are satisfied, thereby enabling to provide a stretched film good in film formability, excellent in electric characteristics and dynamic characteristics, and good in thickness accuracy. Herein, the relaxation time G'/G"/ω is a value measured by a method described below.

(Requirement (6))

The ash content of the polypropylene resin composition according to the present invention is preferably 50 ppm by mass or less, more preferably 40 ppm by mass or less, further preferably 30 ppm by mass or less, particularly preferably 25 ppm by mass or less. The ash content is 50 ppm by mass or less, to thereby provide a capacitor film for a film capacitor, having a high dielectric breakdown voltage. The reason for this is presumed as follows: a high ash content easily causes formation of a void, and thus has an influence on the breakdown withstand voltage. Herein, the

lower limit of the ash content is not particularly limited, and the ash content is preferably lower. In addition, the ash content is a value measured by a method described below.

(Requirement (7))

The chlorine content of the polypropylene resin composition according to the present invention is preferably 10 ppm by mass or less, more preferably 7 ppm by mass or less, further preferably 5 ppm by mass or less, particularly preferably 2 ppm by mass or less. The chlorine content is 10 ppm by mass or less, to thereby provide a capacitor film for a film capacitor, having a high dielectric breakdown voltage. The reason for this is presumed as follows: chlorine is converted into hydrochloric acid to gradually destroy polypropylene, thereby having an influence on the breakdown withstand voltage in use for a long period. Herein, the lower limit of the chlorine content is not particularly limited, and the chlorine content is preferably lower. In addition, the chlorine content is a value measured by a method described below.
The polypropylene resin composition according to the present invention preferably includes 80% by mass or more, more preferably 90% by mass or more, further preferably 95% by mass or more of polypropylene. The polypropylene resin composition according to the present invention may also be made of polypropylene.

[Method for producing polypropylene resin composition]

The method for producing the polypropylene resin composition according to the present invention is not particularly limited as long as the requirements (1) to (3) are satisfied. The production method, however, preferably includes treating a raw material of the polypropylene resin composition with peroxide. That is, the polypropylene resin composition according to the present invention is preferably treated with peroxide. Hereinafter, the polypropylene resin composition before a treatment with peroxide is designated as a "polypropylene raw material".

(Method for producing polypropylene raw material)

The method for producing the polypropylene raw material is not particularly limited, and a method is preferably used in which propylene is polymerized in the presence of an olefin polymerization catalyst including a solid titanium catalyst component. Examples of the solid titanium catalyst component include a catalyst including (I) a solid titanium catalyst component containing magnesium, titanium, halogen and an electron donor, (II) an organometallic compound catalyst component, and (III) an organosilicon compound catalyst component typified by alkoxysilane and an electron donor typified by a specified polyether compound.
The solid titanium catalyst component (I) can be prepared by bringing a magnesium compound (a-1), a titanium compound (a-2) and an electron donor (a-3) into contact with one another. Examples of the magnesium compound (a-1) can include a magnesium compound having reducibility, such as a magnesium compound having a magnesium-carbon bond or a magnesium-hydrogen bond, and a magnesium compound not having reducibility, typified by such as halogenated magnesium, alkoxy magnesium halide, allyloxy magnesium halide, alkoxy magnesium, allyloxy magnesium, and magnesium carboxylate. These may be used singly or in combinations of two or more thereof.
As the titanium compound (a-2), for example, a tetravalent titanium compound represented by the following formula (A) is preferably used.

$$Ti(OR^6)_g X^1_{4-g} \qquad (A)$$

In formula (A), $R^6$ is a hydrocarbon group, $X^1$ is a halogen atom, and $0 \leq g \leq 4$.
Specific examples include tetrahalogenated titanium such as $TiCl_4$, $TiBr_4$ and $TiI_4$; trihalogenated alkoxy titanium such as $Ti(OCH_3)Cl_3$, $Ti(OC_2H_5)Cl_3$, $Ti(O\text{-}n\text{-}C_4H_9)Cl_3$, $Ti(OC_2H_5)Br_3$ and $Ti(O\text{-}iso\text{-}C_4H_9)Br_3$; dihalogenated dialkoxy titanium such as $Ti(OCH_3)_2Cl_2$, $Ti(OC_2H_5)_2Cl_2$, $Ti(O\text{-}n\text{-}C_4H_9)_2Cl_2$ and $Ti(OC_2H_5)_2Br_2$; monohalogenated trialkoxy titanium such as $Ti(OCH_3)_3Cl$, $Ti(OC_2H_5)_3Cl$, $Ti(O\text{-}n\text{-}C_4H_9)_3Cl$ and $Ti(OC_2H_5)_3Br$; and tetraalkoxy titanium such as $Ti(OCH_3)_4$, $Ti(OC_2H_5)_4$, $Ti(O\text{-}n\text{-}C_4H_9)_4$, $Ti(O\text{-}iso\text{-}C_4H_9)_4$ and $Ti(O\text{-}2\text{-}ethylhexyl)_4$. These may be used singly or in combinations of two or more thereof.
Examples of the electron donor (a-3) include alcohol, phenol, ketone, aldehyde, ester of organic acid or inorganic acid, organic acid halide, ether, acid amide, acid anhydride, ammonia, amine, nitrile, isocyanate, a nitrogen-containing cyclic compound, and an oxygen-containing cyclic compound. Among them, preferable examples can include an aromatic polyester compound typified by phthalic acid ester, aliphatic polyester typified by succinic acid ester having a substituent, alicyclic polyester, and polyether. These compounds may be used in combinations of two or more thereof.
The electron donor (a-3) is preferably a cyclic ester compound represented by the following formula (1). A cyclic ester compound represented by the following formula (2) may also be included.

[Formula 1]

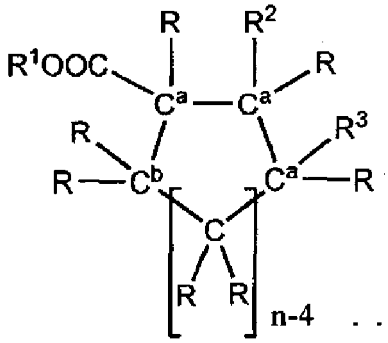

... (1)

In formula (1), n is an integer of 5 to 10. Each of $R^2$ and $R^3$ independently is $COOR^1$ or R, and at least one of $R^2$ and $R^3$ is $COOR^1$. A single bond (excluding a $C^a$-$C^a$ bond, and a $C^a$-$C^b$ bond in the case where $R^3$ is R) in the cyclic backbone may be replaced with a double bond.

Each $R^1$ independently is a monovalent hydrocarbon group having 1 to 20 carbon atoms. Each of a plurality of R's independently is an atom or a group selected from a hydrogen atom, a hydrocarbon group having 1 to 20 carbon atoms, a halogen atom, a nitrogen-containing group, an oxygen-containing group, a phosphorus-containing group, a halogen-containing group and a silicon-containing group. While R's may be mutually bonded to form a ring, at least one R is not a hydrogen atom. A double bond may also be included in the backbone of the ring formed by mutual bonding of R's, and when the backbone of the ring includes two or more $C^a$'s to which $COOR^1$ is bonded, the number of carbon atoms forming the backbone of the ring is 5 to 10.

[Formula 2]

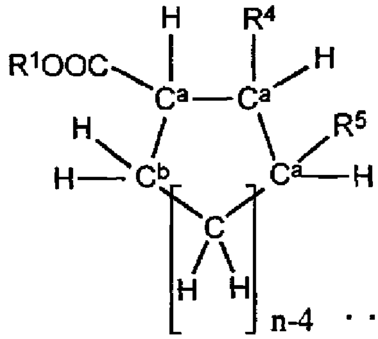

... (2)

In formula (2), n is an integer of 5 to 10. Each of $R^4$ and $R^5$ independently is $COOR^1$ or a hydrogen atom, and at least one of $R^4$ and $R^5$ is $COOR^1$. Each $R^1$ independently is a monovalent hydrocarbon group having 1 to 20 carbon atoms. A single bond (excluding a $C^a$-$C^a$ bond) in the cyclic backbone may be replaced with a double bond.

In the formula (1), all bonds between carbon atoms in the cyclic backbone are preferably single bonds. Among the cyclic ester compounds represented by formula (1), diisobutyl 3,6-dimethylcyclohexane-1,2-dicarboxylate, di-n-hexyl 3,6-dimethylcyclohexane-1,2-dicarboxylate, di-n-octyl 3,6-dimethylcyclohexane-1,2-dicarboxylate, diisobutyl 3-methyl-6-ethylcyclohexane-1,2-dicarboxylate, di-n-hexyl 3-methyl-6-ethylcyclohexane-1,2-dicarboxylate, di-n-octyl 3-methyl-6-ethylcyclohexane-1,2-dicarboxylate, diisobutyl 3-methyl-6-n-propylcyclohexane-1,2-dicarboxylate, di-n-hexyl 3-methyl-6-n-propylcyclohexane-1,2-dicarboxylate, di-n-octyl 3-methyl-6-n-propylcyclohexane-1,2-dicarboxylate, diisobutyl 3,6-diethylcyclohexane-1,2-dicarboxylate, di-n-hexyl 3,6-diethylcyclohexane-1,2-dicarboxylate, and di-n-octyl 3,6-diethylcyclohexane-1,2-dicarboxylate are particularly preferable.

Among the compounds represented by formula (2), diisobutyl cyclohexane-1,2-dicarboxylate, dihexyl cyclohexane-1,2-dicarboxylate, diheptyl cyclohexane-1,2-dicarboxylate, dioctyl cyclohexane-1,2-dicarboxylate, and di-2-ethylhexyl cyclohexane-1,2-dicarboxylate are particularly preferable.

When the magnesium compound (a-1), the titanium compound (a-2) and the electron donor (a-3) described above are brought into contact with one another, other reaction agent such as silicon, phosphorus, or aluminum may

co-exist, and a carrier-supported solid titanium catalyst component (I) can also be prepared by using a carrier.

The solid titanium catalyst component (I) can be prepared by adopting any method including a known method. Examples include the following methods (1) to (4).

(1) A method in which a solution of an adduct of alcohol, a metal acid ester or the like with the magnesium compound (a-1) in hydrocarbon is brought into contact with and reacted with the titanium compound (a-2) after or while being brought into contact with and reacted with the titanium compound (a-2) and an organometallic compound to precipitate a solid.

(2) A method in which the magnesium compound (a-1) and alcohol, ester or the like, and a solid adduct are brought into contact with and reacted with the titanium compound (a-2) and an organometallic compound, and thereafter brought into contact with and reacted with the titanium compound (a-2).

(3) A method in which the titanium compound (a-2) and the electron donor (a-3) are brought into contact with and reacted with a contact product of an inorganic carrier and the organic magnesium compound (a-1). Here, the contact product may be brought into contact with and reacted with a halogen-containing compound and/or an organometallic compound in advance.

(4) Any of the above methods, including being performed under the coexistence with an aromatic halogenated hydrocarbon or the like.

The organometallic compound catalyst component (II) is preferably one including a metal selected from Group 1, Group 2 and Group 13 in the periodic table, and specific examples thereof can include organoaluminum compounds represented by the following formulae (B-1) to (B-3), a complex alkyl compound of any metal of Group I and aluminum, and an organometallic compound of any metal of Group II.

An organoaluminum compound (b-1) represented by

$$R^7{}_mAl\ (OR^8)_rH_pX_q \qquad (B\text{-}1)$$

(wherein $R^7$ and $R^8$ are a hydrocarbon group having 1 to 15 carbon atoms, preferably 1 to 4 carbon atoms, and these may be the same as or different from each other; X represents a halogen atom, $0 < m \leq 3$, $0 \leq n < 3$, $0 \leq p < 3$, $0 \leq q < 3$, and $m + r + p + q = 3$.).

A complex alkylated product (b-2) of any metal of Group 1 and aluminum, represented by

$$M^1AlR^7{}_4 \qquad (B\text{-}2)$$

(wherein $M^1$ is Li, Na or K, and $R^7$ is the same as above.).

A dialkyl compound (b-3) of any metal of Group 2 or Group 13, represented by

$$R^7R^8M^2 \qquad (B\text{-}3)$$

(wherein $R^7$ and $R^8$ are the same as above, and $M^2$ is Mg, Zn or Cd.).

Examples of the organoaluminum compound (b-1) can include a compound represented by $R^7{}_mAl\ (OR^8)_{3-m}$ (where $R^7$ and $R^8$ are the same as above, and preferably $1.5 \leq m \leq 3$.), a compound represented by $R^7{}_mAlX_{3-m}$ (where $R^7$ is the same as above, X is halogen, and $0 < m < 3$.), a compound represented by $R^7{}_mAlH_{3-m}$ (where $R^7$ is the same as above, and preferably $2 \leq m < 3$.), and a compound represented by $R^7{}_mAl\ (OR^8)_nX_q$ (where $R^7$ and $R^8$ are the same as above, X is halogen, and $0 < m \leq 3$, $0 \leq r < 3$, $0 \leq q < 3$ and $m + r + q = 3$.).

Specific examples of the organosilicon compound catalyst component (III) include an organic silicon compound represented by the following formula (C).

$$SiR^9R^{10}{}_d(OR^{11})_{3-d} \qquad (C)$$

(in formula (C), d represents 0, 1 or 2, $R^9$ represents a group selected from the group consisting of a cyclopentyl group, a cyclohexyl group, a cyclopentenyl group, a cyclopentadienyl group, an alkyl group, a dialkylamino group and derivatives thereof, and $R^{10}$ and $R^{11}$ each represent a hydrocarbon group.)

In formula (C), $R^9$ preferably is a bulky substituent, for example, a cyclopentyl group or a derivative thereof, such as a cyclopentyl group, a 2-methylcyclopentyl group, a 3-methylcyclopentyl group, a 2-ethylcyclopentyl group, a 3-propylcyclopentyl group, a 3-isopropylcyclopentyl group, a 3-butylcyclopentyl group, a 3-tert-butylcyclopentyl group, a 2,2-dimethylcyclopentyl group, a 2,3-dimethylcyclopentyl group, a 2,5-dimethylcyclopentyl group, a 2,2,5-trimethylcyclopentyl group, a 2,3,4,5-tetramethylcyclopentyl group, a 2,2,5,5-tetramethylcyclopentyl group, a 1-cyclopentylpropyl group or a 1-methyl-1-cyclopentylethyl group; a cyclohexyl group or a derivative thereof, such as a cyclohexyl group, a

2-methylcyclohexyl group, a 3-methylcyclohexyl group, a 4-methylcyclohexyl group, a 2-ethylcyclohexyl group, a 3-ethylcyclohexyl group, a 4-ethylcyclohexyl group, a 3-propylcyclohexyl group, a 3-isopropylcyclohexyl group, a 3-butylcyclohexyl group, a 3-tert-butylcyclohexyl group, a 4-propylcyclohexyl group, a 4-isopropylcyclohexyl group, a 4-butylcyclohexyl group, a 4-tert-butylcyclohexyl group, a 2,2-dimethylcyclohexyl group, a 2,3-dimethylcyclohexyl group, a 2,5-dimethylcyclohexyl group, a 2,6-dimethylcyclohexyl group, a 2,2,5-trimethylcyclohexyl group, a 2,3,4,5-tetramethylcyclohexyl group, a 2,2,5,5-tetramethylcyclohexyl group, a 2,3,4,5,6-pentamethylcyclohexyl group, a 1-cyclohexylpropyl group or a 1-methyl-1-cyclohexylethyl group; a cyclopentenyl group or a derivative thereof, such as a cyclopentenyl group, a 2-cyclopentenyl group, a 3-cyclopentenyl group, a 2-methyl-1-cyclopentenyl group, a 2-methyl-3-cyclopentenyl group, a 3-methyl-3-cyclopentenyl group, a 2-ethyl-3-cyclopentenyl group, a 2,2-dimethyl-3-cyclopentenyl group, a 2,5-dimethyl-3-cyclopentenyl group, a 2,3,4,5-tetramethyl-3-cyclopentenyl group or a 2,2,5,5-tetramethyl-3-cyclopentenyl group; a cyclopentadienyl group or a derivative thereof, such as a 1,3-cyclopentadienyl group, a 2,4-cyclopentadienyl group, 1,4-cyclopentadienyl group, a 2-methyl-1,3-cyclopentadienyl group, a 2-methyl-2,4-cyclopentadienyl group, a 3-methyl-2,4-cyclopentadienyl group, a 2-ethyl-2,4-cyclopentadienyl group, a 2,2-dimethyl-2,4-cyclopentadienyl group, a 2,3-dimethyl-2,4-cyclopentadienyl group, a 2,5-dimethyl-2,4-cyclopentadienyl group or a 2,3,4,5-tetramethyl-2,4-cyclopentadienyl group; an alkyl group such as an isopropyl group, a tert-butyl group or a sec-butyl group; or a dialkylamino group such as a dimethylamino group, a diethylamino group or a dibutylamino group. $R^9$ more preferably is a cyclopentyl group, a cyclohexyl group or an isopropyl group, further preferably a cyclopentyl group.

In addition, specific examples of the hydrocarbon group as each of $R^{10}$ and $R^{11}$ in formula (C) can include, in addition to the above substituents, a hydrocarbon group such as an alkyl group, a cycloalkyl group, an aryl group, and an aralkyl group. When two or more of $R^{10}$'s or $R^{11}$'s are present, $R^{10}$'s or $R^{11}$'s may be the same as or different from each other, and $R^{10}$ and $R^{11}$ may be the same as or different from each other. In addition, in formula (C), $R^9$ and $R^{10}$ may also be crosslinked via an alkylene group or the like.

Specific examples of the organic silicon compound represented by formula (C) can include trialkoxysilanes such as diethylaminotriethoxysilane, cyclopentyltrimethoxysilane, 2-methylcyclopentyltrimethoxysilane, 2,3-dimethylcyclopentyltrimethoxysilane, 2,5-dimethylcyclopentyltrimethoxysilane, cyclopentyltriethoxysilane, cyclopentenyltrimethoxysilane, 3 -cyclopentenyltrimethoxysilane, 2,4-cyclopentadienyltrimethoxysilane and cyclohexyltrimethoxysilane; dialkoxysilanes such as diisopropyldimethoxysilane, tert-butylethyldimethoxysilane, cyclopentyltert-butyldimethoxysilane, cyclohexylisobutyldimethoxysilane, bis(diethylamino)dimethoxysilane, dicyclopentyldimethoxysilane, bis(2-methylcyclopentyl)dimethoxysilane, bis(3-tert-butylcyclopentyl)dimethoxysilane, bis(2,3-dimethylcyclopentyl)dimethoxysilane, bis(2,5-dimethylcyclopentyl)dimethoxysilane, dicyclopentyldiethoxysilane, dicyclopentenyldimethoxysilane, di(3 -cyclopentenyl)dimethoxysilane, bis(2,5 -dimethyl-3 -cyclopentenyl)dimethoxysilane, di-2,4-cyclopentadienyldimethoxysilane, bis(2,5-dimethyl-2,4-cyclopentadienyl)dimethoxysilane, bis(1-methyl-1-cyclopentylethyl)dimethoxysilane, cyclopentylcyclopentenyldimethoxysilane, cyclopentylcyclopentadienyldimethoxysilane, cyclopentadienylindenyldimethoxysilane and dicyclohexyldimethoxysilane; and monoalkoxysilanes such as tricyclopentylmethoxysilane, tricyclopentenylmethoxysilane, tricyclopentadienylmethoxysilane, tricyclopentylethoxysilane, dicyclopentylmethylmethoxysilane, dicyclopentylethylmethoxysilane, dicyclopentylmethylethoxysilane, cyclopentyldimethylmethoxysilane, cyclopentyldiethylmethoxysilane, cyclopentyldimethylethoxysilane, bis(2,5 -dimethylcyclopentyl)cyclopentylmethoxysilane, dicyclopentylcyclopentenylmethoxysilane, dicyclopentylcyclopentadienylmethoxysilane and tricyclohexylmethoxysilane. Among them, diisopropyldimethoxysilane, tert-butylethyldimethoxysilane, cyclopentyltert-butyldimethoxysilane, cyclohexylisobutyldimethoxysilane, bisdiethylaminodimethoxysilane, diethylaminotriethoxysilane, dicyclopentyldimethoxysilane, and the like are preferable because of allowing stereoregularity of polypropylene to be high, and among them, dicyclopentyldimethoxysilane is particularly preferable. These compounds can be used singly or in combinations of two or more thereof.

In the case where the catalyst including the solid titanium catalyst component (I), the organometallic compound catalyst component (II) and the organosilicon compound catalyst component (III) described above is used to perform polymerization of propylene, pre-polymerization can also be performed in advance. The pre-polymerization is to polymerize an olefin in the presence of the solid titanium catalyst component (I), the organometallic compound catalyst component (II) and if necessary the organosilicon compound catalyst component (III).

As the olefin to be pre-polymerized, for example, an $\alpha$-olefin having 2 to 8 carbon atoms can be used. Specifically, a linear olefin such as ethylene, propylene, 1-butene or 1-octene; an olefin having a branched structure, such as 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene or 3-ethyl-1-hexene, or the like can be used. These can also be copolymerized. A bulky olefin such as 3-methyl-1-butene or 3-methyl-1-pentene may be preferably used for the purpose of enhancing the degree of crystallization of polypropylene to be obtained.

The pre-polymerization is preferably performed so that 0.1 to 1000 g, preferably 0.3 to 500 g of a polymer is produced per gram of the solid titanium catalyst component (I). If the amount to be pre-polymerized is too large, the production efficiency of a polymer in the main polymerization may be deteriorated. In the pre-polymerization, the catalyst can be used in a considerably higher concentration than the catalyst concentration in the system of the main polymerization.

In the main polymerization, the solid titanium catalyst component (I) (or pre-polymerization catalyst) is preferably used in an amount of 0.0001 to 50 mmol, preferably 0.001 to 10 mmol in terms of a titanium atom per liter of the polymerization volume. The organometallic compound catalyst component (II) is preferably used in an amount of 1 to 2000 mol, preferably 2 to 500 mol, as the amount of a metal atom based on 1 mol of a titanium atom in the polymerization system. The organosilicon compound catalyst component (III) is preferably used in an amount of 0.001 to 50 mol, preferably 0.01 to 20 mol per mol of a metal atom of the organometallic compound catalyst component (II).

The polymerizations may be performed by any method, for example, a gas phase polymerization method, or a liquid phase polymerization method such as a solution polymerization method or a suspension polymerization method, and each stage thereof may be performed by a separate method. In addition, the polymerizations may be performed by any method such as a continuous method or a semi-continuous method, and each stage thereof may be divided and performed in a plurality of polymerization tanks, for example, 2 to 10 polymerization tanks.

An inert hydrocarbon or liquid propylene may be used as a polymerization medium. In addition, polymerization conditions of each stage are appropriately selected within the following ranges: the polymerization temperature is in the range from -50 to + 200°C, preferably 20 to 100°C, and the polymerization pressure is within the range from ordinary pressure to 10 MPa (gauge pressure), preferably 0.2 to 5 MPa (gauge pressure).

After termination of the polymerizations, a post-treatment step such as a known catalyst deactivation treatment step, a catalyst residue removal step, and a drying step is, if necessary, performed to thereby provide polypropylene as a powder. As the solid titanium catalyst component (I), for example, any catalyst disclosed in JP2723137B, JP2776914B, International Publication No. WO2006/77945, International Publication No. WO2008/10459, JP04-218507A, JP2774160B, International Publication No. WO2004/16662, JP2011-256278A, JP2009-57473A, and the like can also be used.

(Treatment of polypropylene raw material with peroxide)

In the present specification, the treatment with peroxide refers to treating of the polypropylene raw material with peroxide. In addition, the polypropylene raw material may be mixed with peroxide, and granulated. For example, when a powder of the polypropylene raw material is granulated by an extruder, organic peroxide or the like can be compounded therewith to cleave the molecular chain of polypropylene, thereby adjusting the molecular weight (viscosity).

Examples of the organic peroxide include dialkyl peroxides such as di-t-butyl peroxide, t-butylcumyl peroxide, dicumyl peroxide, 2,5-dimethyl-2,5-di(t-butylperoxy)hexane and 2,5-dimethyl-2,5-di(t-butylperoxy)hexyne-3; peroxy esters such as t-butylperoxy acetate, t-butylperoxy benzoate, t-butylperoxy isopropyl carbonate, 2,5-dimethyl-2,5-di(benzoylperoxy)hexane and 2,5-dimethyl-2,5-di(benzoylperoxy)hexyne-3; diacylperoxides such as benzoyl peroxide; and hydroperoxides such as diisopropylbenzene hydroperoxide and 2,5-dimethyl-2,5-di(hydroperoxy)hexane. These may be used singly or in combinations of two or more thereof.

The amount of the organic peroxide to be compounded is preferably 0.001 to 0.2 parts by mass, more preferably 0.002 to 0.1 parts by mass, further preferably 0.002 to 0.05 parts by mass based on 100 parts by mass of the polypropylene raw material. The amount to be compounded is 0.001 to 0.2 parts by mass, to thereby enable to properly treat the polypropylene raw material, easily providing desired polypropylene.

The temperature in the treatment with the organic peroxide is preferably 220 to 290°C. The temperature is within the above range, to thereby enable to properly treat the polypropylene raw material with peroxide, easily providing desired polypropylene.

The method for producing a pellet including the polypropylene resin composition according to the present invention is not particularly limited as long as a common granulation method is adopted. For example, the pellet is obtained by compounding a predetermined amount of peroxide, together with other additive, to a powder of the polypropylene raw material, and granulating the resultant by using a uniaxial or biaxial extruder at a resin temperature ranging from 220°C to 290°C.

(Additive)

The polypropylene resin composition according to the present invention preferably includes, in addition to polypropylene, an antioxidant and/or a neutralizer which are/is known and which can be compounded as additive(s) to polypropylene. The amount of the antioxidant to be compounded is preferably 500 ppm by mass or more and 8000 ppm by mass or less, more preferably 750 ppm by mass or more and 7500 ppm by mass or less relative to polypropylene. In addition, the amount of the neutralizer to be compounded is preferably 5 ppm by mass or more and 1000 ppm by mass or less, more preferably 10 ppm by mass or more and 750 ppm by mass or less, further preferably 15 ppm by mass or more and 500 ppm by mass or less.

In addition, any additive other than the antioxidant and the neutralizer can also be used if such any additive is

known and can be compounded to polypropylene, as long as the object of the present invention is not impaired. For example, a nucleating agent (an α-crystal nucleating agent such as a phosphoric acid ester metal salt or a sorbitol-based compound, or a β-crystal nucleating agent such as an amide-based compound), an ultraviolet absorber, a lubricant, a flame retardant, an antistatic agent, or the like can be used.

[Biaxially stretched film]

The biaxially stretched film according to the present invention is obtained by biaxially stretching the polypropylene resin composition according to the present invention. The thickness of the biaxially stretched film according to the present invention is preferably 1 to 50 μm, more preferably 1.5 to 30 μm, further preferably 1.5 to 20 μm, particularly preferably 2 to 15 μm. The thickness is 1 μm or more, to thereby hardly cause film breakage, resulting in enhancement in film productivity. On the other hand, the thickness is 50 μm or less, to thereby enable to provide a film light in weight and also excellent in flexibility.

In addition, the biaxially stretched film according to the present invention is obtained by stretching the polypropylene resin composition at a stretch area ratio (area ratio of longitudinal × transverse) of 30 to 80 times, preferably 35 to 75 times, further preferably 35 to 70 times, particularly preferably 35 to 50 times. When the stretch area ratio is less than 30 times, it may be difficult to achieve desired strength and thickness accuracy. In addition, when the stretch area ratio is more than 80 times, breakage easily occurs in stretching, and productivity may be poor.

[Method for producing biaxially stretched film]

The method for producing the biaxially stretched film according to the present invention includes stretching the polypropylene resin composition according to the present invention at a stretch area ratio (longitudinal × transverse) of 30 to 80 times. The biaxially stretched film according to the present invention is obtained by, for example, producing a raw roll sheet (hereinafter, also designated as "raw roll"), and thereafter stretching the sheet at the above stretch area ratio. As the method for producing the raw roll sheet, for example, the following method can be adopted. Each raw material is melt-kneaded in advance to produce a polypropylene resin composition, and the polypropylene resin composition can be used as a raw material. The polypropylene resin composition is supplied from a hopper to an extruder, heated and molten at 170 to 300°C, preferably 200 to 260°C, and melt-extruded through a T die. Thereafter, the resultant is solidified by cooling with a metallic cooling roll at 30 to 120°C, to provide an unstretched raw roll sheet. The thickness of the raw roll sheet is not particularly limited, and it is preferably 60 to 800 μm, more preferably 80 to 500 μm. The thickness of the raw roll sheet is 60 μm or more, to thereby enable to prevent breakage in stretching. In addition, the thickness is 800 μm or less, to thereby provide a thin film.

The raw roll sheet can be biaxially stretched to thereby produce the biaxially stretched film. Examples of the biaxial stretching method include a sequential biaxial stretching method in which a film is uniaxially stretched in a machine direction (MD direction, longitudinal direction) and thereafter stretched in a direction (TD direction, transverse direction) perpendicular to the machine direction, and a simultaneous biaxial stretching method in which stretching is simultaneously made in a machine direction and a direction perpendicular thereto. Specifically, a sequential biaxial stretching method such as a tenter method or a tubular film method, or a simultaneous biaxial stretching method can be used.

A tenter method can be performed by, for example, the following method. A molten sheet melt-extruded through a T die is solidified by a cooling roll, and the sheet is, if necessary, pre-heated, and thereafter introduced into a stretching zone. Next, the sheet is stretched at a temperature of 120 to 160°C and at 3 to 9 times in a machine direction (MD direction, longitudinal direction), and stretched at a temperature of 150 to 190°C and at 5 to 11 times in a direction (TD direction, transverse direction) perpendicular to the machine direction. The total stretch area ratio is 30 to 80 times, preferably 35 to 75 times, more preferably 35 to 70 times. In addition, a film biaxially stretched can also be, if necessary, heat fixed at 160 to 190°C. Thus, a biaxially stretched film more enhanced in thermal dimensional stability, wear resistance, and the like can be obtained.

[Capacitor film for film capacitor]

The capacitor film for a film capacitor according to the present invention includes the polypropylene resin composition according to the present invention. The capacitor film for a film capacitor preferably includes 75% by mass or more and 100% by mass or less, more preferably 85% by mass or more and 100% by mass or less of the polypropylene resin composition. The thickness of the capacitor film for a film capacitor according to the present invention is preferably 1 to 50 μm, more preferably 1.5 to 30 μm, further preferably 1.5 to 20 μm, particularly preferably 2 to 15 μm. The thickness is 1 μm or more, to thereby hardly cause film breakage, resulting in enhancement in film productivity. On the other hand, the thickness is 50 μm or less, to thereby enable the film capacitor to be reduced in size and also increased in electric capacity.

In addition, the capacitor film for a film capacitor according to the present invention can be preferably obtained by, for example, stretching the polypropylene resin composition at a stretch area ratio (area ratio of longitudinal × transverse) of 30 to 80 times, more preferably 35 to 75 times, further preferably 35 to 70 times, particularly preferably 35 to 50 times. The stretch area ratio is 30 times or more, to thereby enable to reduce the crystal size in the film, providing a film having a higher insulation breakdown strength.

[Method for producing capacitor film for film capacitor]

The capacitor film for a film capacitor according to the present invention is obtained by, for example, producing a raw roll sheet, and thereafter stretching the sheet. As the method for producing the raw roll sheet, for example, the following method can be adopted. Each raw material is melt-kneaded in advance to produce a polypropylene resin composition, and the polypropylene resin composition can be used as a raw material. The polypropylene resin composition is supplied from a hopper to an extruder, heated and molten at 170 to 300°C, preferably 200 to 260°C, and melt-extruded through a T die. Thereafter, the resultant is solidified by cooling with a metallic cooling roll at 30 to 120°C, to provide an unstretched raw roll sheet. The thickness of the raw roll sheet is not particularly limited, and it is preferably 60 to 800 μm, more preferably 80 to 500 μm. The thickness of the raw roll sheet is 60 μm or more, to thereby enable to prevent breakage in stretching. In addition, the thickness is 800 μm or less, to thereby provide a thin film suitable for a capacitor film for a film capacitor.

The raw roll sheet is stretched to thereby enable to produce the capacitor film for a film capacitor. Examples of the stretching method include a uniaxial stretching method and a biaxial stretching method, and a biaxial stretching method is preferable. Examples of the biaxial stretching method include a sequential biaxial stretching method in which a film is uniaxially stretched in a machine direction (MD direction, longitudinal direction) and thereafter stretched in a direction (TD direction, transverse direction) perpendicular to the machine direction, and a simultaneous biaxial stretching method in which stretching is simultaneously made in a machine direction and a direction perpendicular thereto. Specifically, a sequential biaxial stretching method such as a tenter method or a tubular film method, or a simultaneous biaxial stretching method can be used.

A tenter method can be performed by, for example, the following method. A molten sheet melt-extruded through a T die is solidified by a cooling roll, and the sheet is, if necessary, pre-heated, and thereafter introduced into a stretching zone. Next, the sheet is stretched at a temperature of 120 to 160°C and at 3 to 9 times in a machine direction (MD direction, longitudinal direction), and stretched at a temperature of 150 to 190°C and at 5 to 11 times in a direction (TD direction, transverse direction) perpendicular to the machine direction. The total stretch area ratio is preferably 30 to 80 times, more preferably 35 to 75 times, further preferably 35 to 70 times. In addition, a film biaxially stretched can also be, if necessary, heat fixed at 160 to 190°C. Thus, a film more enhanced in thermal dimensional stability, wear resistance, and the like can be obtained.

Examples

Hereinafter, the present invention will be described with reference to Examples, but the present invention is not limited to these Examples at all. Respective physical properties in Examples and Comparative Examples were measured as follows.

(1) Melt flow rate (MFR)

The MFR was measured under a load of 2.16 kg at 230°C according to ASTM D 1238.

(2) Isotactic pentad fraction (mmmm fraction)

The mmmm fraction was measured using $^{13}$C-NMR under the following conditions, based on the attribution described in A. zambelli et al., Macromolecules, 8, 687 (1975). Herein, the mmmm fraction is a value represented by the following formula.

$$\text{mmmm fraction} = (\text{peak area at } 21.7 \text{ ppm})/(\text{peak area at } 19 \text{ to } 23 \text{ ppm}).$$

<Measurement conditions>

Apparatus: JNM-Lambada400 (trade name, manufactured by JEOL Ltd.)
Resolution: 400 MHz
Measurement temperature: 125°C
Solvent: 1,2,4-trichlorobenzene/deuterated benzene = 7/4 (mass ratio)
Pulse width: 7.8 μsec
Pulse interval: 5 sec
Cumulative number: 2000
Shift reference: TMS = 0 ppm
Mode: single pulse broadband decoupling.

(3) Relaxation time (G'/G"/ω (τ))

A viscoelasticity measurement apparatus (manufactured by Reologica Instruments AB) was used to perform measurement under the following conditions.

Sample: disc of ϕ25 mm and 1 mm in thickness, produced by press molding machine (pressurized at 230°C and 981 N (100 kgf) for 3 minutes, and thereafter cooled at 30°C and 981 N (100 kgf) for 3 minutes)
Measurement conditions: temperature: 175°C, strain: 5%, angular frequency measured: $10^{-2}$ to $10^{2}$ $s^{-1}$.

(4) Ethylene content

The content of a unit derived from ethylene in a propylene-based polymer was calculated by using a $^{13}C$-NMR spectrum chart. That is, the content of a unit derived from ethylene in a propylene-based polymer was determined as follows: first, the attribution of a peak was determined according to the method described in Polymer (1998), vol. 29, p. 1848, and thereafter the content of a unit derived from ethylene in a propylene-based polymer was calculated according to the method described in Macromolecules (1977), vol. 10, p. 773.

(5) Ash content

In a magnetic crucible was placed 100 g of a sample, and heated on an electric heater to burn the sample. Furthermore, the magnetic crucible was placed in an electric furnace at 800°C for 30 minutes, and complete ashing of the sample was performed. The magnetic crucible was cooled in a desiccator for 1 hour, and thereafter the mass of the ash was measured down to the 0.1-mg unit by a precision balance, to calculate the ash content. The detection limit of the present measurement is 1 ppm.

(6) Chlorine content

A sample (0.8 g) was burned at 400 to 900°C in an argon/oxygen stream by use of a combustion apparatus (manufactured by Mitsubishi Kasei Corp.). Thereafter, a combustion gas was collected into ultrapure water, and a sample liquid after concentration was subjected to measurement of the chlorine content by use of a DIONEX-DX300 type ion chromatographic apparatus (trade name, manufactured by Nippon Dionex KK) and an anion column AS4A-SC (trade name, manufactured by Nippon Dionex KK). Herein, the detection limit of the present measurement is 1 ppm.

(7) Mz, Mw, Mn, Mw/Mn, Mz/Mw and Mz/Mn

GPC (gel permeation chromatography) was used to perform measurement under the following conditions.

Measurement apparatus: 150CVtype (trade name, manufactured by Waters)
Sample concentration: 7.5 mg/4 ml
Column: Shodex AD-806ms (trade name, manufactured by Showa Denko K. K.)
Measurement temperature: 135°C
Solvent: o-dichlorobenzene

Polystyrene conversion

The resulting chromatogram was analyzed to thereby calculate Mz, Mw, Mn, Mw/Mn, Mz/Mw and Mz/Mn. The value based on polystyrene conversion was calculated by a universal calibration method. The baseline of the GPC chromatogram was defined with the retention time for rise of the elution curve being regarded as a starting point and

the retention time corresponding to a molecular weight of 1000 being regarded as an end point.

(8) Thickness accuracy 2 σ

The thickness of a biaxially stretched film for evaluation was measured at 30 points in total (5 points in the MD direction × 6 points in the TD direction), and the standard deviation (σ) thereof was determined and 2 σ was defined as an indicator of the thickness accuracy.

(9) Tensile elastic modulus (MD, TD)

A biaxially stretched film for evaluation was cut out to form a strip having a width of 10 mm and a length of 150 mm, and a test was performed in the longitudinal direction at a rate of 5 mm/min and at a distance between chucks of 100 mm according to JIS K6781, to measure the tensile elastic modulus (MD, TD).

(10) Heat shrinkage rate (MD, TD)

A biaxially stretched film for evaluation was cut out to form a strip having a width of 10 mm and a length of 150 mm, and the strip was marked at an interval of distance 100 mm. After standing in an oven at 120°C for 15 minutes, the interval between marks was measured (1 (mm)), and the heat shrinkage rate was calculated according to the following formula.

$$\text{Heat shrinkage rate (\%)} = 100 - l.$$

(11) Amount to be discharged in extrusion

The amount to be discharged in extrusion was measured under the following conditions.

Extruder: 35 mmϕ sheet molding machine
Extruder temperature: 250°C
Number of screw rotations: 120 rpm.

(12) Appearance of raw roll

The appearance of a raw roll was visually evaluated according to the following criteria.

⊙: the appearance was wholly uniform, and almost no variation in thickness was observed.
○: almost no variation in thickness was observed, but the appearance was partially ununiform.
Δ: the appearance was partially ununiform, and variation in thickness was observed.
×: the appearance was wholly ununiform, and variation in thickness was observed.

[Example 1]

(1) Production of solid catalyst

The atmosphere in a high-speed stirring apparatus having an inner volume of 2 L (trade name: TK homomixer M type, manufactured by PRIMIX Corporation) was sufficiently replaced with nitrogen. Thereafter, 700 ml of purified decane, 10 g of magnesium chloride, 24.2 g of ethanol and 3 g of Rheodol SP-S20 (trade name, produced by Kao Corporation, sorbitan distearate) were placed in the apparatus. The resulting suspension liquid was heated with stirring, and stirred at 800 rpm and at 120°C for 30 minutes. Next, while the suspension liquid was stirred at a high speed so that no precipitate was generated, the suspension liquid was transferred to a 2-L glass flask (equipped with a stirrer), into which 1 L of purified decane cooled to -10°C in advance was loaded, by use of a Teflon (registered trademark) tube having an inner diameter of 5 mm. A solid produced by transferring of the suspension liquid was collected by filtration, and sufficiently washed with purified n-heptane, thereby providing a solid adduct in which 2.8 mol of ethanol was coordinated with 1 mol of magnesium chloride.
The solid adduct was suspended in decane, and 23 mmol of the solid adduct in terms of a magnesium atom was introduced to 100 ml of titanium tetrachloride kept at -20°C, with stirring, providing a mixed liquid. The mixed liquid

was heated to 80°C over 5 hours. Once the temperature reached 80°C, diisobutyl 3,6-dimethylcyclohexane-1,2-dicarboxylate (cis form-trans form mixture) was added in a proportion of 0.085 mol based on 1 mol of a magnesium atom of the solid adduct, and heated to 110°C over 40 minutes. Once the temperature reached 110°C, diisobutyl cyclohexane 1,2-dicarboxylate (cis form-trans form mixture) was further added in a proportion of 0.0625 mol based on 1 mol of a magnesium atom of the solid adduct, and kept at 110°C for 90 minutes, with stirring, thereby allowing them to react.

After completion of the reaction, a solid portion was collected by thermal filtration. The solid portion was resuspended in 100 ml of titanium tetrachloride, and thereafter, once the temperature reached 110°C by temperature rise, the resultant was allowed to react while that temperature was kept with stirring for 45 minutes. After completion of the reaction, a solid portion was collected again by thermal filtration, and sufficiently washed with decane and heptane at 100°C until no free titanium compound was detected during such washing.

A solid titanium catalyst component prepared by the above operation was stored as a decane suspension liquid. The composition of the solid titanium catalyst component was as follows: titanium: 3.2% by mass, magnesium: 17.0% by mass, chlorine: 57.0% by mass, diisobutyl 3,6-dimethylcyclohexane 1,2-dicarboxylate: 10.6% by mass, diisobutyl cyclohexane 1,2-dicarboxylate: 8.9% by mass, and ethyl alcohol residue: 0.6% by mass.

(2) Production of pre-polymerization catalyst

Into an autoclave having an inner volume of 200 L, equipped with a stirrer, were inserted 130 g of the solid titanium catalyst component prepared in (1) above, 71 mL of triethylaluminum and 65 L of heptane. While the inner temperature was kept at 10 to 18°C, 1300 g of propylene was inserted thereto, and the resultant was allowed to react for 60 minutes with stirring, thereby providing a pre-polymerization catalyst. The pre-polymerization catalyst included 10 g of polypropylene per gram of the solid titanium catalyst component.

(3) Main polymerization

Propylene, the pre-polymerization catalyst, triethylaluminum and dicyclopentyldimethoxysilane were continuously supplied to a vessel polymerization tank having an inner volume of 1000 L, equipped with stirrer, at 138 kg/hr, 1.7 g/hr, 12 mL/hr and 22 mL/hr, respectively. Furthermore, hydrogen was supplied so that the hydrogen concentration in the gas phase portion was 2.5% by mol. The polymerization was performed under the conditions of a polymerization temperature of 70°C and a pressure of 3.0 MPa/G.

The resulting slurry was fed to a vessel polymerization tank having an inner volume of 500 L, equipped with stirrer, and further polymerization was performed. To the polymerization tank were supplied propylene at 33 kg/hr and hydrogen so that the hydrogen concentration in the gas phase portion was 1.8% by mol. The polymerization was performed under the conditions of a polymerization temperature of 67°C and a pressure of 2.9 MPa/G.

The resulting slurry was fed to a vessel polymerization tank having an inner volume of 500 L, equipped with stirrer, and further polymerization was performed. To the polymerization tank were supplied propylene at 13 kg/hr and hydrogen so that the hydrogen concentration in the gas phase portion was 1.5% by mol. The polymerization was performed under the conditions of a polymerization temperature of 65°C and a pressure of 2.7 MPa/G.

The resulting slurry was fed to a washing tank with liquid propylene, and a propylene homopolymer powder was washed. After the solvent of the resulting slurry was evaporated, gas-solid separation was performed, to provide a propylene homopolymer. The resulting propylene homopolymer was introduced into a conical dryer, and vacuum drying was performed at 80°C. Next, 60 g of pure water and 0.54 L of propylene oxide were added to 100 kg of a product, and a dechlorination treatment was performed at 90°C for 2 hours. Thereafter, vacuum drying was performed at 80°C, to provide a powder of a propylene homopolymer (hereinafter, also designated as "PP1").

(4) Production of propylene homopolymer pellet

To 100 parts by mass of the resulting propylene homopolymer (PP1) were compounded 0.2 parts by mass of 3,5-di-tert-butyl-4-hydroxytoluene as an antioxidant, 0.5 parts by mass of tetrakis[methylene-3(3,5-di-tert-butyl-4-hydroxyphenyl)propionate]methane as an antioxidant, 0.01 parts by mass of calcium stearate as a neutralizer, and 0.003 parts by mass of 2,5-dimethyl-2,5-di(t-butylperoxy)hexane. The mixture was melt-kneaded at 230°C by using a uniaxial extruder, to perform granulation of propylene homopolymer (PP1). As a granulating machine, GMZ50-32 (trade name, manufactured by GM Engineering, Ltd., L/D = 32, 50 mmϕ uniaxial) was used. Physical properties of the resulting propylene homopolymer pellet (hereinafter, also designated as "PP1A") are shown in Table 1.

(5) Production of biaxially stretched film

The propylene homopolymer pellet (PP1A) was molten at 250°C, thereafter extruded through a T die (manufactured by GM Engineering, Ltd.) of 30 mmϕ, and cooled by one cooling roll kept at a temperature of 30°C, at a tensile speed of 1.0 m/min, to provide a raw roll sheet having a thickness of 0.5 mm. The resulting raw roll sheet was cut to a size of 85 mm × 85 mm, and biaxially stretched under the following conditions, to provide a biaxially stretched film for evaluation.

Stretching apparatus: KAROIV (trade name, manufactured by Bruckner Inc.)
Pre-heating temperature: 154°C
Pre-heating time: 60 seconds
Stretch area ratio: sequential biaxial stretching at 5 × 7 times (MD direction: 5 times, TD direction: 7 times)
Stretching speed: 6 m/min.

[Example 2]

The same method as in Example 1 was performed except that (3) Main polymerization above was modified as follows.

(3) Main polymerization

Propylene, the pre-polymerization catalyst, triethylaluminum and cyclohexylmethyldimethoxysilane were continuously supplied to a vessel polymerization tank having an inner volume of 500 L, equipped with stirrer, at 136 kg/hr, 1.3 g/hr, 8.8 mL/hr and 1.7 mL/hr, respectively. Furthermore, hydrogen was supplied so that the hydrogen concentration in the gas phase portion was 0.9% by mol. The polymerization was performed under the conditions of a polymerization temperature of 70°C and a pressure of 3.1 MPa/G.

The resulting slurry was fed to a vessel polymerization tank having an inner volume of 500 L, equipped with stirrer, and further polymerization was performed. To the polymerization tank were supplied propylene at 15 kg/hr and hydrogen so that the hydrogen concentration in the gas phase portion was 0.8% by mol. The polymerization was performed under the conditions of a polymerization temperature of 68°C and a pressure of 2.9 MPa/G.

The resulting slurry was fed to a washing tank with liquid propylene, and a propylene homopolymer powder was washed. After the solvent of the resulting slurry was evaporated, gas-solid separation was performed, to provide a propylene homopolymer. The resulting propylene homopolymer was introduced into a conical dryer, and vacuum drying was performed at 80°C. Next, 60 g of pure water and 0.54 L of propylene oxide were added to 100 kg of a product, and a dechlorination treatment was performed at 90°C for 2 hours. Thereafter, vacuum drying was performed at 80°C, to provide a powder of a propylene homopolymer (hereinafter, also designated as "PP2").

Physical properties of a propylene homopolymer pellet (hereinafter, also designated as "PP2A") obtained after granulation of PP2 are shown in Table 1.

[Example 3]

The same method as in Example 1 was performed except that (3) Main polymerization above was modified as follows.

(3) Main polymerization

Propylene, the pre-polymerization catalyst, triethylaluminum and cyclohexylmethyldimethoxysilane were continuously supplied to a vessel polymerization tank having an inner volume of 500 L, equipped with stirrer, at 136 kg/hr, 1.2 g/hr, 8.8 mL/hr and 1.6 mL/hr, respectively. Furthermore, hydrogen was supplied so that the hydrogen concentration in the gas phase portion was 1.5% by mol. The polymerization was performed under the conditions of a polymerization temperature of 70°C and a pressure of 3.1 MPa/G.

The resulting slurry was fed to a vessel polymerization tank having an inner volume of 500 L, equipped with stirrer, and further polymerization was performed. To the polymerization tank were supplied propylene at 14 kg/hr and hydrogen so that the hydrogen concentration in the gas phase portion was 1.2% by mol. The polymerization was performed under the conditions of a polymerization temperature of 68°C and a pressure of 2.9 MPa/G.

The resulting slurry was fed to a washing tank with liquid propylene, and a propylene homopolymer powder was washed. After the solvent of the resulting slurry was evaporated, gas-solid separation was performed, to provide a propylene homopolymer. The resulting propylene homopolymer was introduced into a conical dryer, and vacuum drying was performed at 80°C. Next, 60 g of pure water and 0.54 L of propylene oxide were added to 100 kg of a product, and a dechlorination treatment was performed at 90°C for 2 hours. Thereafter, vacuum drying was performed at 80°C, to provide a powder of a propylene homopolymer (hereinafter, also designated as "PP3").

Physical properties of a propylene homopolymer pellet (hereinafter, also designated as "PP3A") obtained after granulation of PP3 are shown in Table 1.

[Example 4]

Eighty parts by mass of H-100M (trade name, produced by Prime Polymer Co., Ltd., propylene homopolymer, MFR: 0.5) and 20 parts by mass of H-50000 (trade name, produced by Prime Polymer Co., Ltd., propylene homopolymer, MFR: 500) were mixed by a Henschel mixer. Furthermore, 0.2 parts by mass of 3,5-di-tert-butyl-4-hydroxytoluene as an antioxidant, 0.5 parts by mass of tetrakis[methylene-3(3,5-di-tert-butyl-4-hydroxyphenyl)propionate]methane as an antioxidant, 0.01 parts by mass of calcium stearate as a neutralizer, and 0.003 parts by mass of peroxide were mixed, to provide a propylene homopolymer (hereinafter, also designated as "PP4").

Physical properties of a propylene homopolymer pellet (hereinafter, also designated as "PP4A") obtained by granulating PP4 in the same manner as in Example 1 are shown in Table 1. In addition, the same method as in Example 1 was performed except for the above conditions.

[Comparative Example 1]

(1) Production of solid catalyst

Three hundred grams of anhydrous magnesium chloride, 1.6 L of kerosene, and 1.5 L of 2-ethylhexyl alcohol were heated at 140°C for 3 hours to provide a uniform solution. To this solution was added 70 g of phthalic anhydride, stirred at 130°C for 1 hour and dissolved, and thereafter cooled to room temperature. Furthermore, the above solution was slowly dropped into 8.5 L of titanium tetrachloride cooled to -20°C. After completion of the dropping, the resultant was heated to 110°C, and 215 mL of diisobutyl phthalate was added and further stirred for 2 hours. A solid was separated by hot filtration, and the resulting solid was re-suspended in 10 L of titanium tetrachloride, and stirred again at 110°C for 2 hours. A solid was separated by hot filtration, and the resulting solid was washed with n-heptane until no titanium was substantially detected in the washing liquid. The resulting solid catalyst contained 2.2% by mass of titanium and 11.0% by mass of diisobutyl phthalate.

(2) Polymerization

An autoclave having an inner volume of 70 L, which was sufficiently dried and whose atmosphere was replaced with nitrogen, was prepared, a mixture in which 2 mL of triethylaluminum was diluted with 1000 mL of heptane, 0.8 mL of dicyclopentyldimethoxysilane, and 150 mg of the solid catalyst were added thereto, and 20 kg of propylene and 17 NL of hydrogen were added, to perform polymerization at 70°C for 2 hours. After the polymerization, the unreacted propylene was separated by decantation, and a polymerization product was washed with liquefied propylene three times. Next, 0.2 g of water and 10 mL of propylene oxide were added to the product, further treated at 90°C for 15 minutes, and dried under reduced pressure for 5 minutes. The treatment with propylene oxide was repeated three times, and a polymer produced was taken out, to thereby provide a propylene homopolymer (hereinafter, also designated as "PP5").

(3) Production of propylene homopolymer pellet

A propylene homopolymer pellet (hereinafter, also designated as "PP5B") was obtained by mixing 0.002 parts by mass of calcium stearate and 0.2 parts by mass of Irganox-1330 (trade name, produced by Ciba-Geigy Corporation) with 100 parts by mass of PP5 and forming the mixture into a pellet at 250°C. Physical properties of PP5B are shown in Table 1. In addition, the same method as in Example 1 was performed except for the above conditions.

[Comparative Example 2]

(1) Production of solid catalyst

Into a glass container having an inner volume of 10 L were added 952 g of anhydrous magnesium chloride (formed into a flake and further pulverized), 4420 ml of decane and 3906 g of 2-ethylhexyl alcohol, and heated at 130°C for 2 hours, to provide a uniform solution. Into the solution was added 213 g of phthalic anhydride, and further stirred and mixed at 130°C for 1 hour, to dissolve phthalic anhydride.

The uniform solution thus obtained was cooled to 23°C and left to stand for 10 hours, and thereafter 750 ml of a supernatant was extracted at 50 ml/min at a position of 10 cm from the liquid surface of the uniform solution. The magnesium chloride solution was dropped into 2000 ml of titanium tetrachloride at -20°C placed in a separate 10-L

container, over 1 hour. After the dropping, the temperature of the resulting mixed liquid was raised to 110°C over 4 hours, and, once the temperature reached 110°C, 52.2 g of diisobutyl phthalate (DIBP) was added, and thereafter the temperature was kept at that temperature with stirring for 2 hours. Next, a solid portion was collected by hot filtration, and the solid portion was re-suspended in 2750 ml of titanium tetrachloride, and thereafter heated again at 110°C for 2 hours.

After completion of the heating, a solid portion was collected again by thermal filtration, and washed with decane and hexane at 110°C until no titanium compound was detected in the washing liquid. A solid titanium catalyst component prepared as above contained 3% by mass of titanium, 58% by mass of chlorine, 18% by mass of magnesium and 21% by mass of DIBP.

(2) Production of pre-polymerization catalyst

After 7 L of purified heptane, 0.16 mol of triethylaluminum, and 0.053 mol of the solid titanium catalyst component obtained as above in terms of a titanium atom were charged into a 10-L autoclave equipped with a stirrer, under a nitrogen atmosphere, 900 g of propylene was introduced, and the resultant was allowed to react for 1 hour with the temperature being kept at 5°C or less.

After completion of polymerization, the atmosphere in the reactor was replaced with nitrogen, and the supernatant liquid was removed and washed with purified heptane three times. The resulting pre-polymerization catalyst was re-suspended in purified heptane and transferred to a catalyst supply tank, and the concentration of the solid titanium catalyst component was adjusted by purified heptane so as to be 1 g/L. The pre-polymerization catalyst included 10 g of polypropylene per gram of the solid titanium catalyst component.

(3) Main polymerization

Into a polymerization tank 1 having an inner volume of 140 L, equipped with a stirrer, was charged 20 L of liquefied propylene, and liquefied propylene, the pre-polymerization catalyst, triethylaluminum and cyclohexylmethyldimethoxysilane were continuously supplied at 80 kg/hr, 18 g/hr, 47 mmol/hr and 9 mmol/hr, respectively, with the liquid level being kept, for polymerization at a temperature of 73°C. No hydrogen was supplied to the polymerization tank 1. The resulting polymer was fed, as being in the form of a slurry, to a polymerization tank 2 having an inner volume of 500 L, equipped with a stirrer.

While the liquid level was kept at 300 L in the polymerization tank 2, liquefied propylene was newly continuously supplied at 70 kg/hr for polymerization at a temperature of 71°C. In addition, hydrogen was also continuously supplied so that the concentration in the gas phase portion of the polymerization tank 2 was kept at 0.4% by mol. The resulting polymer was fed, as being in the form of a slurry, to a polymerization tank 3 having an inner volume of 500 L, equipped with a stirrer.

While the liquid level was kept at 300 L in the polymerization tank 3, liquefied propylene was newly continuously supplied at 56 kg/hr for polymerization at a temperature of 70°C. In addition, hydrogen was also continuously supplied as in the polymerization tank 2 so that the concentration in the gas phase portion was kept at 0.4% by mol. After 10 ml of methanol was added to the resulting slurry, the resulting liquid was fed to a washing tank with liquid propylene, and an operation including stirring, standing, removal of the supernatant, and addition of liquid propylene (100 L per operation) was repeated seven times, to wash a powder of a propylene homopolymer. Thereafter, propylene was evaporated to provide a powder of a propylene homopolymer (hereinafter, also designated as "PP6").

(4) Production of propylene homopolymer pellet

To 100 parts by mass of PP6 were compounded 0.1 parts by mass of 3,5-di-tert-butyl-4-hydroxytoluene as an antioxidant, 0.2 parts by mass of tetrakis[methylene-3(3,5-di-tert-butyl-4-hydroxyphenyl)propionate]methane as an antioxidant, and 0.01 parts by mass of calcium stearate as a neutralizer. The resultant was melt-kneaded at 230°C by a uniaxial extruder and formed into a pellet, to provide a propylene homopolymer pellet (hereinafter, also designated as "PP6B"). As a granulating machine, GMZ50-32 (trade name, manufactured by GM Engineering, Ltd., L/D = 32, uniaxial) was used. Physical properties of PP6B are shown in Table 1. In addition, the same method as in Example 1 was performed except for the above conditions.

[Comparative Example 3]

(1) Production of solid catalyst

The atmosphere in a high-speed stirring apparatus having an inner volume of 2 L (manufactured by PRIMIX

Corporation) was sufficiently replaced with nitrogen, and thereafter 700 ml of purified decane, 10 g of magnesium chloride, 24.2 g of ethanol and 3 g of Rheodol SP-S20 (trade name, produced by Kao Corporation, sorbitan distearate) were placed in the apparatus. The resulting suspension liquid was heated with stirring, and stirred at 800 rpm and at 120°C for 30 minutes. Next, while the suspension liquid was stirred at a high speed so that no precipitate was generated, the suspension liquid was transferred to a 2-L glass flask (equipped with a stirrer), into which 1 L of purified decane cooled to -10°C in advance was loaded, by use of a Teflon (registered trademark) tube having an inner diameter of 5 mm. A solid produced by transferring of the suspension liquid was collected by filtration, and sufficiently washed with purified n-heptane, thereby providing a solid adduct in which 2.8 mol of ethanol was coordinated with 1 mol of magnesium chloride.

The solid adduct, which was suspended in 60 ml of decane and whose amount was 92.4 mmol in terms of a magnesium atom, was introduced in the total amount thereof to 400 ml of titanium tetrachloride kept at -20°C, with stirring. The mixed liquid was heated to 80°C over 5 hours. Once the temperature reached 80°C, diisobutyl 3,6-dimethylcyclohexane-1,2-dicarboxylate (trans form) was added in a proportion of 0.15 mol based on 1 mol of a magnesium atom of the solid adduct, and heated to 120°C over 40 minutes. Thereafter, the temperature was kept at 120°C for 90 minutes, with stirring, thereby performing a reaction.

After completion of the reaction, a solid portion was collected by thermal filtration. The solid portion was re-suspended in 200 ml of titanium tetrachloride, and thereafter, once the temperature reached 130°C by temperature rise, the resultant was allowed to react with the temperature being kept for 45 minutes with stirring. After completion of the reaction, a solid portion was collected again by thermal filtration, and sufficiently washed with decane and heptane at 100°C until no free titanium compound was detected during such washing. A solid titanium catalyst component prepared by the above operation was stored as a decane slurry.

(2) Polymerization

To polymerization tank having an inner volume of 600 L were added 200 L of propylene and 550 NL of hydrogen at room temperature. Thereafter, 100 mmol of triethylaluminum, 20 mmol of cyclohexylmethyldimethoxysilane, and 0.8 mmol of the solid titanium catalyst component in terms of a titanium atom were added, and the content of the polymerization tank was rapidly heated to 70°C. After polymerization at 70°C for 1 hour, the reaction was quenched by a small amount of ethanol, and the propylene was purged. Thereafter, the resulting product was charged to 300 L of heptane including 1% by mass of isobutyl alcohol under a nitrogen stream, and stirred and washed. Next, solid-liquid separation was performed, and a powder of the resulting propylene homopolymer was dried under reduced pressure at 80°C overnight. Thus, a powder of a propylene homopolymer (hereinafter, also designated as "PP7") was obtained.

(3) Production of propylene homopolymer pellet

Compounded were 100 parts by mass of PP7, 0.3 parts by mass of 3,5-di-t-butyl-4-hydroxytoluene, 0.6 parts by mass of tetrakis[methylene-3(3,5-di-t-butyl-4-hydroxyphenyl)propionate]methane, and 0.02 parts by mass of calcium stearate. Thereafter, the resultant was molten at 230°C, and formed into a pellet by a GMZ50-32 (trade name, manufactured by GM Engineering, Ltd., L/D = 32) uniaxial extruder. Physical properties of the resulting propylene homopolymer pellet (hereinafter, also designated as "PP7B") are shown in Table 1. In addition, the same method as in Example 1 was performed except for the above conditions.

[Comparative Example 4]

F-300SP (trade name, produced by Prime Polymer Co., Ltd.) was used as a propylene homopolymer pellet. Physical properties of the propylene homopolymer pellet (hereinafter, also designated as "PP8B") are shown in Table 1. In addition, the same method as in Example 1 was performed except for the above conditions.

[Comparative Example 5]

(1) Preparation of magnesium compound

After the atmosphere in a glass reactor having an inner volume of 12 L, equipped with a stirrer, was sufficiently replaced with a nitrogen gas, about 4,860 g of ethanol, 32 g of iodine and 320 g of metallic magnesium were charged, and allowed to react under a reflux condition with stirring, to provide a solid reaction product. A reaction liquid including the solid reaction product was dried under reduced pressure, thereby providing a magnesium compound (solid product).

(2) Preparation of solid catalyst component

To a three-necked glass flask having an inner volume of 5 L, whose atmosphere was sufficiently replaced with a nitrogen gas, were added 160 g of the magnesium compound (not pulverized) obtained in (1) above, 800 mL of purified heptane, 24 mL of silicon tetrachloride and 23 mL of diethyl phthalate. While the system was kept at 90°C with stirring, 770 mL of titanium tetrachloride was charged, and the resultant was allowed to react at 110°C for 2 hours and thereafter a solid component was separated and washed with purified heptane at 80°C. Furthermore, 1,220 mL of titanium tetrachloride was added, and the resultant was allowed to react at 110°C for 2 hours and thereafter sufficiently washed with purified heptane, providing a solid catalyst component.

(3) Treatment before polymerization

To a reaction tank having an inner volume of 500 L, equipped with a stirring blade, 230 L of n-heptane was charged and 25 kg of the solid catalyst component obtained in (2) above was further added. Next, triethylaluminum and cyclohexylmethyldimethoxysilane were added in proportions of 0.6 mol and 0.4 mol per gram of Ti in the solid catalyst component, respectively, thereafter propylene was introduced until the propylene partial pressure reached 0.3 $kg/cm^2G$, and the resultant was allowed to react at 20°C for 4 hours. After completion of the reaction, a solid catalyst component was washed with n-heptane several times, carbon dioxide was supplied thereto, and the resultant was stirred for 24 hours.

(4) Polymerization of propylene

To a polymerization tank having an inner volume of 200 L, equipped with a stirring blade, were supplied the solid catalyst component treated in (3) above, triethylaluminum and cyclohexylmethyldimethoxysilane at 3 mmol/hr, 0.37 mmol/hr and 95 mmol/hr in terms of a Ti atom, respectively, and allowed to react at a polymerization temperature of 80°C and a propylene pressure of 28 $kg/cm^2G$. Here, a hydrogen gas was supplied so that a predetermined molecular weight was achieved, and a polypropylene resin was obtained.

(5) Production of propylene homopolymer pellet

To the polypropylene resin obtained in (4) above were compounded 1,000 ppm of a phenol-based antioxidant, 1,500 ppm of a phosphorus-based antioxidant, 1,500 ppm of calcium stearate (neutralizer), and 2,500 ppm of a silica-based anti-blocking agent on the mass basis, and formed into a pellet at a resin temperature of 220°C by use of a 2FCM continuous kneading granulator manufactured by Kobe Steel Ltd. Physical properties of the resulting propylene homopolymer pellet (hereinafter, also designated as "PP9B") are shown in Table 1. In addition, the same method as in Example 1 was performed except for the above conditions.

[Comparative Example 6]

(1) Production of propylene homopolymer

(a) Preparation of solid titanium catalyst component

Anhydrous magnesium chloride (7.14 kg) (75 mol), 37.5 L of decane and 35.1 L (225 mol) of 2-ethylhexyl alcohol were heated and allowed to react at 130°C for 2 hours, to provide a uniform solution. Thereafter, 1.67 kg (11.3 mol) of phthalic anhydride was added to the solution, and further stirred and mixed at 130°C for 1 hour, thereby allowing phthalic anhydride to be dissolved in the uniform solution. The uniform solution thus obtained was cooled to room temperature, and thereafter the total amount thereof was dropped to 200 L (1800 mol) of titanium tetrachloride kept at -20°C, over 1 hour. After the dropping, the temperature of the resulting solution was raised to 110°C over 4 hours, and, once the temperature reached 110°C, 5.03 L (18.8 mol) of diisobutyl phthalate was added thereto. Furthermore, stirring was continued at the temperature for 2 hours, thereafter a solid portion was recovered by hot filtration, and the solid portion was re-suspended in 275 L of $TiCl_4$ and heated and allowed to react again at 110°C for 2 hours. After completion of the reaction, a solid portion was collected again by hot filtration, and washed with decane and hexane at 110°C. The washing operation was performed until no titanium compound was detected in the washing liquid. Thus, a solid titanium catalyst component was obtained.

(b) Production of pre-polymerization catalyst

Into a 500-L reactor equipped with a stirrer were placed 3.5 kg of the solid titanium catalyst component and

300 L of n-heptane under a nitrogen gas atmosphere, and cooled to -5°C with stirring. Next, a solution (2.0 mol/L) of triethylaluminum in n-heptane and a solution (0.01 mol/L) of dicyclopentyldimethoxysilane in n-heptane were added so as to be in concentrations of 60 (mmol/L) and 10 (mmol/L), respectively, and stirring was continued for 5 minutes.

Next, the system was decompressed, and thereafter propylene was continuously supplied, and propylene was polymerized for 4 hours. After completion of the polymerization, propylene was purged with nitrogen gas, a solid phase portion was washed at room temperature three times with 10 L of n-hexane per washing. Furthermore, the solid phase portion was dried under reduced pressure at room temperature for 1 hour, to prepare a pre-polymerization catalyst.

(c) Main polymerization

Into a 500-L stainless autoclave equipped with a stirrer was placed one obtained by mixing 6 L of a solution (0.1 mol/L) of triisobutylaluminum in n-heptane and 0.6 L of a solution (0.01 mol/L) of dicyclopentyldimethoxysilane in n-heptane and keeping the resultant for 5 minutes under a nitrogen gas atmosphere. Next, 100 L of a hydrogen gas and 300 L of liquid propylene serving as molecular weight regulators were placed under pressure, and thereafter the reaction system was heated to 70°C. After 4.2 g of the pre-polymerization catalyst was charged into the reaction system, polymerization of propylene was performed for 1 hour. After completion of the polymerization, the unreacted propylene was purged, providing 50.1 kg of a propylene homopolymer.

(2) Production of propylene-ethylene random copolymer

A propylene-ethylene random copolymer was produced by the same operation as in (1) above except that 300 L of liquid propylene and 0.5 kg of ethylene were placed under pressure into the autoclave in the main polymerization of (1) (c) above, instead of 300 L of liquid propylene.

(3) Production of propylene polymer composition pellet

The propylene homopolymer and the propylene-ethylene random copolymer were mixed so that the amount of hard component H at 60°C and the amount of hard component H at 160°C, measured using pulse NMR, were 63% and 29%, respectively. Furthermore, 1000 ppm by mass of tetrakis[methylene-3-(3',5'-di-t-butyl-4'-hydroxyphenyl)propionate]methane (product produced by Ciba-Geigy Corporation, trade name: Irganox 1010) as an antioxidant, and 1000 ppm by mass of calcium stearate were mixed by a Henschel mixer. Thereafter, the resulting mixture was charged to a biaxial extruder (65 mmϕ) and kneaded at 200°C and at a number of screw rotations of 200 rpm, providing a pellet of a propylene polymer composition (hereinafter, also designated as "PP10B"). Physical properties of the resulting PP10B are shown in Table 1. In addition, the same method as in Example 1 was performed except for the above conditions.

Herein, the amount of hard component H, measured using pulse NMR, was measured under the following conditions.

Measurement apparatus: JNM-MU25 (manufactured by JEOL Ltd.)
Measurement method: Solid echo method (90-pulse, 2.0 μs, PD 4s, Time 8)
The segment was divided into four parts of Hard (H), Middle (M), Soft 1 (S1) and Soft 2 (S2); and the amount of hard component H was measured.

[Comparative Example 7]

Fifty parts by mass of PP5B produced in Comparative Example 1 and 50 parts by mass of PP7B produced in Comparative Example 3 were mixed, to provide a propylene homopolymer pellet (hereinafter, also designated as "PP11B"). Physical properties of PP11B are shown in Table 1. In addition, the same method as in Example 1 was performed except for the above conditions.

[Comparative Example 8]

A propylene homopolymer pellet (hereinafter, also designated as "PP12B") was obtained in the same manner as in Comparative Example 1 except that 0.002 parts by mass of 2,5-dimethyl-2,5-di(t-butylperoxy)hexane was further added to PP5 100 parts by mass in formation of PP5 produced in Comparative Example 1 into a pellet. Physical properties of PP12B are shown in Table 1. In addition, the same method as in Example 1 was performed except for the above conditions.

[Table 1]

| | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|
| Pellet | - | PP1A | PP2A | PP3A | PP4A | PP5B | PP6B | PP7B | PP8B | PP9B | PP10B | PP11B | PP12B |
| MFR | g/10 min | 3.6 | 4.3 | 7.9 | 4.1 | 4.1 | 3.4 | 3.9 | 3.0 | 3.0 | 3.0 | 4.0 | 5.0 |
| Mz ($\times 10^{-4}$) | - | 113 | 130 | 93 | 138 | 113 | 119 | 200 | 126 | 109 | 124 | 142 | 111 |
| Mw/Mn | - | 7.4 | 7.8 | 7.1 | 8.0 | 6.2 | 5.4 | 9.3 | 5.9 | 5.0 | 5.9 | 7.4 | 6.0 |
| Mz/Mw | - | 3.2 | 3.6 | 3.3 | 4.2 | 3.3 | 3.3 | 5.0 | 3.1 | 3.0 | 3.0 | 3.9 | 3.5 |
| $\tau$ ($\omega$=0.01) | sec | 6.6 | 12.0 | 4.9 | 13.8 | 7.6 | 11.7 | 25.7 | 11.5 | 12.0 | 11.3 | 16.1 | 4.8 |
| mmmm fraction | - | 0.97 | 0.96 | 0.96 | 0.95 | 0.98 | 0.95 | 0.96 | 0.92 | 0.97 | 0.98 | 0.96 | 0.98 |
| Ethylene content | ppm by mass | 0.0 | 0.0 | 0.0 | 0.0 | 0.0 | 0.0 | 0.0 | 0.0 | 0.0 | 0.8 | 0.0 | 0.0 |
| Ash content | ppm by mass | 21 | 20 | 19 | 30 | 20 | 21 | 19 | 600 | 500 | 300 | 20 | 20 |
| Chlorine content | ppm by mass | 2 | 1 | 2 | 5 | 1 | 2 | 2 | 60 | 50 | 30 | 2 | 2 |
| Mw ($\times 10^{-4}$) | - | 35.6 | 36.1 | 28.5 | 32.9 | 34.5 | 36.0 | 39.8 | 40.4 | 36.9 | 41.4 | 36.2 | 32.1 |
| Mn ($\times 10^{-4}$) | - | 4.8 | 4.6 | 4.0 | 4.1 | 5.6 | 6.7 | 4.3 | 6.9 | 7.3 | 7.0 | 4.9 | 4.8 |
| Mz/Mn | - | 23.5 | 28.3 | 23.3 | 33.7 | 20.2 | 17.9 | 46.9 | 18.2 | 14.9 | 17.7 | 28.9 | 23.2 |
| Amount to be discharged in extrusion | kg/hr | 14.6 | 14.4 | 15.1 | 15.0 | 13.4 | 14.5 | 13.4 | 14.6 | 13.6 | 15.5 | 14.7 | 13.6 |
| Appearance of raw roll | - | ⊙ | ⊙ | ⊙ | ⊙ | ⊙ | ○ | × | ⊙ | ⊙ | ⊙ | Δ | ⊙ |
| Thickness accuracy $2\sigma$ | μm | 8 | 5 | 8 | 6 | 10 | 7 | 6 | 6 | 12 | 8 | 9 | 10 |

(continued)

| | | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|
| Tensile elastic modulus | MD | MPa | 3200 | 3000 | 2900 | 2900 | 3200 | 2700 | 3000 | 2200 | 2700 | 2300 | 3000 | 3100 |
| | TD | | 5100 | 4800 | 4700 | 4700 | 5000 | 4300 | 4800 | 4000 | 5200 | 4200 | 4900 | 4900 |
| Heat shrinkage rate | MD | % | 0.9 | 1.2 | 1.0 | 1.1 | 1.4 | 2.9 | 2.2 | 3.0 | 1.2 | 2.1 | 2.1 | 1.3 |
| | TD | | 3.8 | 4.6 | 4.0 | 4.4 | 5.3 | 7.0 | 6.1 | 7.2 | 6.0 | 6.5 | 5.9 | 5.2 |

The present application claims the priorities based on Japanese Patent Application No. 2015-72149 filed on March 31, 2015 and Japanese Patent Application No. 2015-72150 filed on March 31, 2015, the entireties of which are herein incorporated.

While the invention of the present application is described above with reference to embodiments and Examples, the invention of the present application is not intended to be limited to the embodiments and Examples. Various modifications which can be understood by those skilled in the art can be made with reference to the configuration and the detail of the invention of the present application, within the scope of the invention of the present application.

## Claims

**1.** A polypropylene resin composition satisfying the following requirements (1) to (3):

(1) a melt flow rate (MFR) measured under a load of 2.16 kg at 230°C according to ASTM D1238 is 1 to 10 g/10 min;
(2) a pentad isotactic fraction measured using $^{13}C$-NMR is 0.930 or more; and
(3) Mz is 600000 to 1400000, and Mw/Mn is 6.5 to 14.0.

**2.** The polypropylene resin composition according to claim 1, wherein the pentad isotactic fraction in the requirement (2) is 0.930 to 0.999.

**3.** The polypropylene resin composition according to claim 1 or 2, satisfying the following requirement (4):

(4) Mz/Mw is 2.0 to 5.0.

**4.** The polypropylene resin composition according to any one of claims 1 to 3, satisfying the following requirement (5):

(5) a relaxation time G'/G''/ω determined from a storage elastic modulus G' at an angular frequency ω and a loss elastic modulus G" at an angular frequency ω is 4 to 14 seconds at ω = 0.01 rad/sec.

**5.** The polypropylene resin composition according to any one of claims 1 to 4, satisfying the following requirement (6):

(6) an ash content is 50 ppm by mass or less.

**6.** The polypropylene resin composition according to any one of claims 1 to 5, satisfying the following requirement (7):

(7) a chlorine content is 10 ppm by mass or less.

**7.** The polypropylene resin composition according to any one of claims 1 to 6, having been treated with peroxide.

**8.** A method for producing the polypropylene resin composition according to any one of claims 1 to 6, comprising treating a raw material of the polypropylene resin composition with peroxide.

**9.** A biaxially stretched film obtained by stretching the polypropylene resin composition according to any one of claims 1 to 7 at a stretch area ratio (longitudinal × transverse) of 30 to 80 times.

**10.** A method for producing a biaxially stretched film, comprising stretching the polypropylene resin composition according to any one of claims 1 to 7 at a stretch area ratio (longitudinal × transverse) of 30 to 80 times.

**11.** A capacitor film for a film capacitor, comprising the polypropylene resin composition according to any one of claims 1 to 7.

## INTERNATIONAL SEARCH REPORT

International application No.
PCT/JP2016/060372

A. CLASSIFICATION OF SUBJECT MATTER
*C08F110/06*(2006.01)i, *C08L23/12*(2006.01)i, *H01G4/18*(2006.01)i

According to International Patent Classification (IPC) or to both national classification and IPC

B. FIELDS SEARCHED

Minimum documentation searched (classification system followed by classification symbols)
C08F110/00-110/14, C08L23/00-23/36, H01G4/00-4/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-219328 A (Prime Polymer Co., Ltd.), 30 September 2010 (30.09.2010), claims 1 to 7; paragraphs [0001], [0008], [0014], [0022], [0039], [0043], [0044], [0046], [0047], [0094]; examples; tables 1, 2 (Family: none) | 1-6,9-11<br>7,8 |
| Y | JP 2006-265318 A (Prime Polymer Co., Ltd.), 05 October 2006 (05.10.2006), claims 1 to 3; paragraphs [0001], [0005], [0007], [0012] to [0024], [0064]; examples (Family: none) | 7,8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 April 2016 (15.04.16) | 26 April 2016 (26.04.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/060372

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/107052 A1 (Prime Polymer Co., Ltd.), 23 September 2010 (23.09.2010), entire text & JP 2014-231604 A & US 2012/0010318 A1 entire text & EP 2410539 A1 & SG 174386 A & CN 102356439 A & KR 10-2011-0128937 A | 1-11 |
| A | WO 2014/65331 A1 (Prime Polymer Co., Ltd.), 01 May 2014 (01.05.2014), entire text & US 2015/0274908 A1 entire text & EP 2913350 A1 & CN 104736576 A & KR 10-2015-0079621 A & TW 201422700 A | 1-11 |
| A | JP 2009-154332 A (Japan Polyethylene Corp.), 16 July 2009 (16.07.2009), entire text (Family: none) | 1-11 |
| A | JP 2000-63678 A (Mitsui Chemicals, Inc.), 29 February 2000 (29.02.2000), entire text (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9052917 A
- JP 2006143975 A
- JP 2009057473 A
- JP 8073528 A
- JP 8073529 A
- JP 2004315582 A
- JP 2012149171 A
- JP 2723137 B
- JP 2776914 B
- WO 200677945 A
- WO 200810459 A
- JP 4218507 A
- JP 2774160 B
- WO 200416662 A
- JP 2011256278 A
- JP 2015072149 A
- JP 2015072150 A

### Non-patent literature cited in the description

- **A. ZAMBELLI et al.** *Macromolecules,* 1975, vol. 8, 687
- *Polymer,* 1998, vol. 29, 1848
- *Macromolecules,* 1977, vol. 10, 773